# EUROPEAN PATENT SPECIFICATION

(11) **EP 3 092 548 B1**
(45) Date of publication and mention of the grant of the patent: **08.09.2021**
(21) Application number: 15734903.6
(22) Date of filing: 06.01.2015
(51) Int. Cl.: G06F 3/01, G08B 25/00, G08B 25/14, G08B 13/196, H04N 7/18, G06F 3/048

(54) **SYSTEMS AND METHODS OF DISPLAYING INTEGRATED HOME AUTOMATION MODULES**
SYSTEME UND VERFAHREN ZUR ANZEIGE INTEGRIERTE DOMOTIKMODULE
SYSTÈMES ET PROCÉDÉS PERMETTANT D'AFFICHER DES MODULES DOMOTIQUES INTÉGRÉS

(30) Priority: 07.01.2014 US 201461924622 P; 09.09.2014 US 201414480990
(43) Date of publication of application: 16.11.2016
(73) Proprietor: OpenTV, Inc., San Francisco, CA 94111 (US)
(72) Inventor: CHAI, Crx, San Francisco, CA 94111 (US); FISHMAN, Alex, San Francisco, CA 94111 (US)
(74) Representative: Schwegman Lundberg Woessner Limited
(86) International application number: PCT/US2015/010233
(87) International publication number: WO 2015/105763

(56) References cited:
- WO-A1-2010/019624
- US-A1- 2004 260 427
- US-A1- 2005 235 312
- US-A1- 2007 055 390
- US-A1- 2007 192 486
- US-A1- 2009 066 534
- US-A1- 2011 296 459
- US-A1- 2012 291 068
- US-B1- 7 730 223
- None

## Description

### TECHNICAL FIELD

The present disclosure relates to the field of home automation.

### BACKGROUND

Home owners may have security cameras and one or more other network connected home devices located throughout their property. Typically, in order to monitor or control these devices users may be required to use a dedicated monitoring device or a dedicated application for each of the home devices in order to check the status of a particular home device. Currently, there is no single application that allows users to monitor each of the numerous connected home or home automation modules that may be located throughout their property.

Home owners may have network connected devices with digital media playback capabilities including digital televisions, including so-called "smart" televisions, set top boxes, laptop or desktop computers, tablet computers, e-book readers, digital recording devices, digital media players, video gaming devices, cellular telephones, including so-called "smart" phones, located throughout a home. Devices with digital media playback capabilities may be configured to enable a user to select digital media content through one or more graphical user interfaces. Currently, applications for selecting and playback digital media content are distinct from applications for controlling and monitoring home devices. US2011/0296459 discloses a display device presenting security content in a security GUI to display video content and a security video and a toolbar for interactive use of surveillance services.

### SUMMARY

The present invention provides a method and a device for enabling a user to control a home device as defined in the appended claims.

Described herein are systems and methods for monitoring and controlling multiple home devices through a common graphical user interface. The present disclosure relates to the field of home automation and, more specifically, describes techniques for monitoring and controlling network connected home devices. In particular, this disclosure describes techniques for monitoring and controlling multiple home devices through a common set of graphical user interfaces. In some examples, the techniques may be implemented in a device with digital media playback capabilities, including for example, laptop or desktop computers, tablet computers, smart phones, set top boxes, and televisions. Further, a common graphical user interface may enable a user to monitor and control multiple home devices while enabling a user to continue to interact with digital media.

According to the invention a method of enabling a user to control a home device is provided, the method comprising providing a graphical user interface , wherein the graphical user interface simultaneously displays a video pane presenting video associated with a media service, one or more icons associated with a respective home device, and one or more video panes presenting video associated with a respective home device , wherein at least one of the one or more icons graphically indicates a status of the respective home device ;enabling selection of one of the one or more icons to control the respective home device and selection of said video pane to present the video associated with the media service in a full screen viewing mode;causing a selectable notification associated with a said home device to be displayed in the graphical user interface during the presenting of the video associated with the media service in the full screen viewing mode; and based on selection of the selectable notification, causing display of a graphical user interface enabling a user to control the home device.

Further according to the invention a device enabling a user to control a home device to carry out the above method is provided.

Further according to the invention a machine-readable medium embodying instructions which, when executed by a machine, cause the machine to carry out the above method is provided.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is block diagram illustrating an example of a system that may implement one or more techniques of this disclosure.
FIG. 2 is a block diagram illustrating an example of a computing device that may implement one or more techniques of this disclosure.
FIG. 3 is a conceptual diagram illustrating an example of a home device that may implement one or more techniques of this disclosure.
FIG. 4 is a conceptual diagram illustrating example navigational paths to example graphical user interfaces in accordance with one or more techniques of this disclosure.
FIG. 5A-5C are conceptual diagrams illustrating examples of graphical user interfaces in accordance with one or more techniques of this disclosure.
FIG. 6 is a conceptual diagram illustrating an example of a graphical user interface in accordance with one or more techniques of this disclosure.
FIG. 7 is a conceptual diagram illustrating an example of a graphical user interface in accordance with one or more techniques of this disclosure.
FIG. 8A-8B are conceptual diagrams illustrating examples of a graphical user interfaces in accordance with one or more techniques of this disclosure.
FIG. 9A-9B are conceptual diagrams illustrating examples of a graphical user interfaces in accordance with one or more techniques of this disclosure.

### DETAILED DESCRIPTION

The present disclosure relates to the field of home automation, more specifically the software tools necessary to enhance a user's ability to integrate various home automation modules to a centralized dashboard are described. In one embodiment of the present disclosure, a single unified interface and control mechanism is used for all connected home devices and home automation modules. This single interface may be the main control and access point for these devices and the monitoring of these devices may be displayed on a primary screen or from a connected set top box or smart TV.

In an example embodiment, the home automation dashboard allows for the monitoring and control of connected modules from a TV, set top box or other on screen device, such as, a smart phone or tablet. This home application uses a video screen to aggregate all connected home and home automation devices and displays the status of all connected devices on the video screen. The home application may also display live video streams and other graphical interface elements to provide status information to the user. For example, if an alert is triggered on a security camera, a message may be displayed on the video screen that an alert was triggered. The video from the security camera may then be shown to the user on the video screen. The user may then determine whether the alert was set off by mistake or if there is some other reason for the alert.

In another example, not constituting an embodiment of the invention, the application also allows for the control of controllable home automation devices thru a remote control device or other tablet or second screen device. This allows users to interact with connected devices through a single user interface. In this example, the user does not need to be watching the primary screen in order to receive the video alerts, but may also receive such alerts and messages from secondary connected devices. The user may also use the remote control or secondary screen device, such as mobile phone or tablet, to navigate the primary screen. For example, the user may toggle between videos to see all videos and not just the video with the alert. The user may also pan, scan, and zoom a connected video camera via the set top box remote control and view the camera's video on a television in the house.

As an example, the home application may be connected using standard internet protocols for networking. Various Smart home or Home Automation devices currently use their own communication standards and protocols. The example embodiment interfaces with the various standards and allows for the interaction and control of these devices with a single user interface and control. The home application may integrate the various protocols into its control database so that a single application may communicate with multiple devices. The dashboard may also display any status messages, data, video, audio, and alerts in the on-screen TV application. The home application module may be integrated into the middleware stack, but may also be a standalone solution that runs on its own device rather than a set top box or TV set.

For example, home automation devices can connect directly to a home network via cable or via Wi-Fi. These signals may be detected by the home application and system and then the data sent from the modules may be processed and then displayed on the connected TV or monitor. This may also be used with connected thermostats and heating and ventilation systems, smart locks, security cameras, connected appliances like refrigerators and washing machines, motion sensors, smart lighting and electrical switches, and timers.

In another example, the home application may poll the network for any attached devices, either hard wired or via Wi-Fi and may detect the communication and control protocol for the device. If the device protocol is known, it is added to the home application database of home automation devices and the status messages and data may also be presented to the user. If the device is unknown, the system will go through known protocols until it can be successfully connected. If the home module cannot communicate with the device an error message will be displayed to the user.

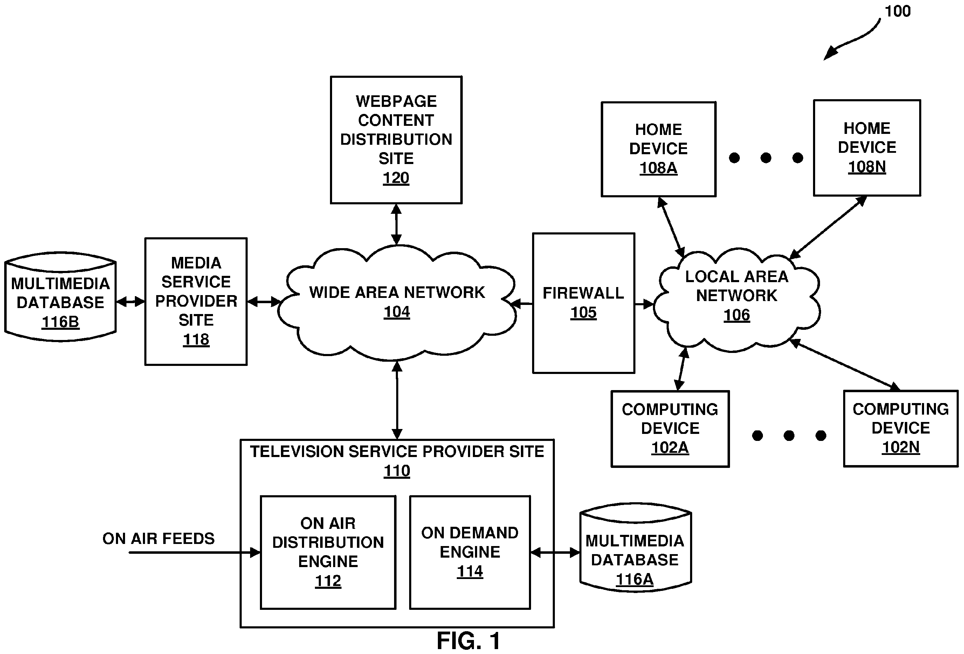

FIG. 1 is block diagram illustrating an example of a system that may implement one or more techniques described in this disclosure. System 100 may be configured to enable a user to control and monitor home devices in accordance with the techniques described herein. In the example illustrated in FIG. 1, system 100 includes one or more computing devices 102A-102N, wide area network 104, local area network 106, one or more home devices 108A-108N, television service provider site 110, media service provider site 118, and webpage content distribution site 120. System 100 may include software modules operating on one or more servers. Software modules may be stored in a memory and executed by a processor. Servers may include one or more processors and a plurality of internal and/or external memory devices. Examples of memory devices include file servers, FTP servers, network attached storage (NAS) devices, local disk drives, or any other type of device or storage medium capable of storing data. Storage medium may include Blu-ray discs, DVDs, CD-ROMs, flash memory, or any other suitable digital storage media. When the techniques described herein are implemented partially in software, a device may store instructions for the software in a suitable, non-transitory computer-readable medium and execute the instructions in hardware using one or more processors.

In the example illustrated in FIG. 1, computing devices 102A-102N may include any device configured to enable a user to access digital content, such as, for example, music, videos, images, webpages, messages, voice communications, and applications and to transmit data to and/or receive data from wide area network 104 and local area network 106. For example, computing devices 102A-102N may be equipped for wired and/or wireless communications and may include set top boxes, digital video recorders, televisions, desktop, laptop, or tablet computers, gaming consoles, mobile devices, including, for example, "smart" phones, cellular telephones, and personal gaming devices. Home devices 108A-108N may include any device configured to perform one or more automated tasks and to transmit data to and/or receive data from wide area network 104 and/or local area network 106. Home devices 108A-108N may include home appliances, such as, for example, washing machines, clothing dryers, food preparation devices, including cooking devices, such as stoves, ovens, microwaves, and coffee makers, refrigeration devices, dishwashing devices, climate control devices, including heating, cooling, ventilation units, security devices, including security cameras, motion sensors, window and door controllers, alarm systems, smoke detectors, and lighting devices. In some examples, home devices 108A-108N may include automobiles and outdoor property maintenance equipment, such as, for example, an automated lawn mower and sprinkler systems. Further, in some examples, home devices 108A-108N may include personal appliances, such as for example, activity trackers, (e.g., a pedometer). It should be noted that although example system 100 is illustrated as having distinct sites, such an illustration is for descriptive purposes and does not limit system 100 to a particular physical architecture. Functions of system 100 and sites included therein may be realized using any combination of hardware, firmware and/or software implementations.

Each of wide area network 104 and local area network 106 may comprise any combination of wireless and/or wired communication media. Each of wide area network 104 and local area network 106 may include coaxial cables, fiber optic cables, twisted pair cables, wireless transmitters and receivers, routers, switches, repeaters, base stations, or any other equipment that may be useful to facilitate communications between various devices and sites. Wide area network 104 and local area network 106 may be distinguished based on types of access. For example, wide area network 104 may include a network configured to enable access to the World Wide Web, for example, the Internet. Local area network 106 may be configured to enable a user to access a subset of devices (e.g., home devices and computing devices located within a user's home). Such access may be limited to a particular set of users based on a set of rules provided by firewall 105. Local area network 106 may be referred to as a personal network.

Each of wide area network 104, firewall 105, and local area network 106 may operate according to a combination of one or more telecommunication protocols. Telecommunications protocols may include proprietary aspects and/or may include standardized telecommunication protocols. Examples of standardized telecommunications protocols include Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, Global System Mobile Communications (GSM) standards, code division multiple access (CDMA) standards, 3rd Generation Partnership Project (3GPP) standards, European Telecommunications Standards Institute (ETSI) standards, Internet Protocol (IP) standards, Wireless Application Protocol (WAP) standards, and IEEE standards, such as, for example, one or more of the 802 standards (e.g., Wi-Fi). In one example, home devices 108A-108N may communicate with local area network 106 using one or more proprietary and/or standardized home automation protocols, such, for example, ZigBee, an Ultra wideband protocol, or a protocol based on ISM frequency bands. Further, in one example, home devices 108A-108N may communicate with local area network 106 using an intermediate device. For example, a subset of home devices 108A-108N may communicate with a gateway device or a router using a protocol, such as, for example, ZigBee and the gateway device may communicate with local area using a protocol such as, Wi-Fi. Further, in one example, a computing device 102A-102N may serve as a gateway device.

As illustrated in FIG. 1, each of television service provider site 110, media service site 118, and webpage content distribution site 120 may be accessed by computing devices 102A-102N through wide area network 104 and local area network 106. It should be noted that each of television service provider site 110, media service site 118, and webpage content distribution site 120 may be accessed using different respective types of networks. For example, a user of a computing device may access webpages through a cable modem connected to a coaxial network maintained by a cable television provider and may access television services from an over the air transmission.

Television service provider 110 represents an example of a television service provider site. Television service provider 110 may be configured to provide computing devices 102A-102N with television service. For example, television service provider 110 may be a public broadcast station, a cable television provider, or a satellite television provider and may be configured to provide television services to analog and/or digital televisions and set top boxes. In the example illustrated in FIG. 1, television service provider 110 includes on air distribution engine 112 and on demand engine 114. On air distribution engine 112 may be configured to receive a plurality of on air feeds and distribute the feeds to computing devices 102A-102N. For example, on air distribution engine 112 may be configured to receive one or more over-the-air television broadcasts via a satellite uplink/downlink and distribute the over-the-air television broadcasts to one or more users of a subscription-based cable television service. On demand engine 114 may be configured to access a multimedia library and distribute multimedia content to one or more of computing devices 102A-102N. For example, on demand engine 114 may access multimedia content (e.g., music, movies, and TV shows) stored in multimedia database 116A and provide a subscriber of a cable television service with movies on a Pay Per View (PPV) basis. Multimedia database 116A may be a storage device configured to store multimedia content. It should be noted that multimedia content accessed through on demand engine 114 may also be located at various sites within system 100 (e.g., peer-to-peer distribution).

Media service provider site 118 represents an example of a multimedia service provider. Media service provider site 118 may be configured to access a multimedia library and distribute multimedia content to one or more of computing devices 102A-102N. For example, media service provider site 118 may access multimedia (e.g., music, movies, and TV shows) stored in multimedia database 116B and provide a user of a media service with multimedia. In some examples, multimedia may include live events (e.g., sporting events) and/or currently airing television programs. Multimedia database 116B may be a storage device configured to store multimedia content. In one example, media service provider site 118 may be configured to provide content to one or more of computing devices 102A-102N using the Internet protocol suite. In some examples, a media service may be referred to as a streaming service. Commercial examples of media services may include Hulu, YouTube, Netflix, Amazon Prime, and network based streaming services (e.g. WatchESPN).

Webpage content distribution site 120 represents an example of a webpage service provider. Webpage content distribution site 120 may be configured to provide hypertext based content to one or more of computing devices 102A-102N through public network 108. It should be noted that hypertext based content may include audio and video content. Hypertext content may be defined according to programming languages, such as, for example, Hypertext Markup Language (HTML), Dynamic HTML, and Extensible Markup Language (XML). Examples of webpage content distribution sites include the Wikipedia website and the United States Patent and Trademark Office website.

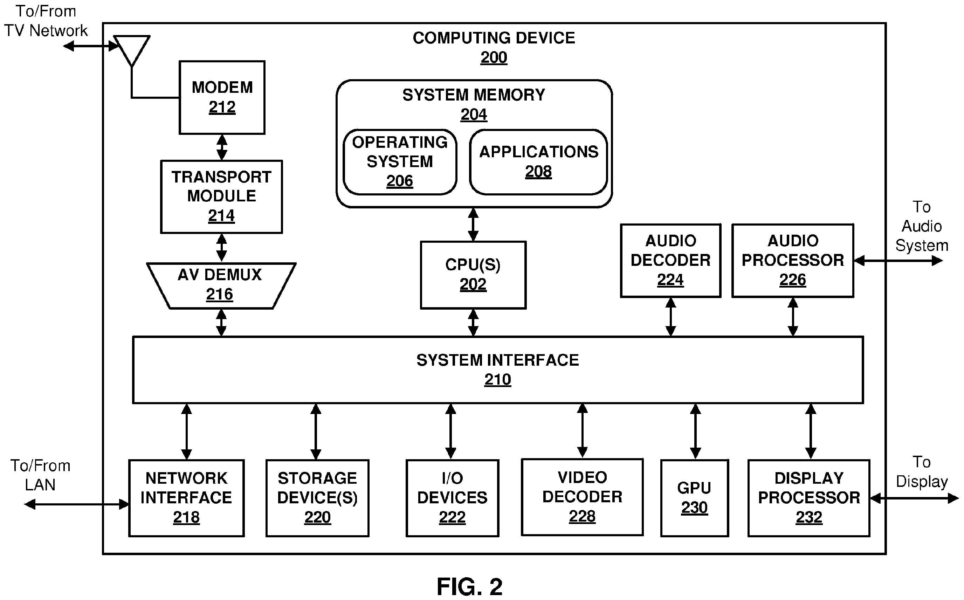

FIG. 2 is a block diagram illustrating an example of a computing device that may implement one or more techniques of this disclosure. Computing device 200 is an example of a computing device that may be configured to transmit data to and receive data from a communications network, allow a user to access multimedia content, and execute one or more applications. Computing device 200 may include or be part of a stationary computing device (e.g., a desktop computer, a television, a set-top box, a gaming console, a dedicated multimedia streaming device, or a digital video recorder), a portable computing device (e.g., a mobile phone, a laptop, a personal data assistant (PDA), or a tablet device) or another type of computing device.

In the example illustrated in FIG. 2, computing device 200 is configured to send and receive data via a television network and send and receive data via a local area network. It should be noted that the techniques described herein may be utilized by devices configured to communicate using any and all combinations of communications networks. As illustrated in FIG. 2, computing device 200 includes central processing unit(s) 202, system memory 204, system interface 210, modem 212, transport module 214, AV demux 216, network interface 218, storage devices 220, I/O devices 222, audio decoder 224, audio processor 226, video decoder 228, graphics processing unit 230, and display processor 232. As illustrated in FIG. 2, system memory 204 includes operating system 206 and applications 208. Each of CPU(s) 202, system memory 204, system interface 210, modem 212, transport module 214, AV demux 216, network interface 218, storage devices 220, I/O devices 222, audio decoder 224, audio processor 226, video decoder 228, graphics processing unit 230, and display processor 232 may be interconnected (physically, communicatively, and/or operatively) for inter-component communications and may be implemented as any of a variety of suitable circuitry, such as one or more microprocessors, digital signal processors (DSPs), application specific integrated circuits (ASICs), field programmable gate arrays (FPGAs), discrete logic, software, hardware, firmware or any combinations thereof. It should be noted that although example computing device 200 is illustrated as having distinct functional blocks, such an illustration is for descriptive purposes and does not limit computing device 200 to a particular hardware architecture. Functions of computing device 200 may be realized using any combination of hardware, firmware and/or software implementations.

CPU(s) 202 may be configured to implement functionality and/or process instructions for execution in computing device 200. CPU(s) 202 may be capable of retrieving and processing instructions, code, and/or data structures for implementing one or more of the techniques described herein. Instructions may be stored on a computer readable medium, such as system memory 204 or storage devices 220. CPU(s) 202 may include multi-core central processing units.

System memory 204 may be described as a non-transitory or tangible computer-readable storage medium. In some examples, system memory 204 may provide temporary and/or long-term storage. In some examples, system memory 204 or portions thereof may be described as non-volatile memory and in other examples portions of system memory 204 may be described as volatile memory. Examples of volatile memories include random access memories (RAM), dynamic random access memories (DRAM), and static random access memories (SRAM). Examples of non-volatile memories include magnetic hard discs, optical discs, floppy discs, flash memories, or forms of electrically programmable memories (EPROM) or electrically erasable and programmable (EEPROM) memories.

System memory 204, may be configured to store information that may be used by computing device 200 during operation. System memory 204 may be used to store program instructions for execution by CPU(s) 202 and may be used by software or applications running on computing device 200 to temporarily store information during program execution. For example, system memory 204 may store instructions associated with operating system 206 and applications 208. Applications 208 may include applications implemented within or executed by computing device 200 and may be implemented or contained within, operable by, executed by, and/or be operatively/communicatively coupled to components of computing device 200. Applications 208 may include instructions that may cause CPU(s) 202 of computing device 200 to perform particular functions. Applications 208 may include applications configured to generate the graphical user interfaces described below. Applications 208 may include algorithms which are expressed in computer programming statements, such as, for-loops, while-loops, if-statements, do-loops, etc. Applications may be developed using a specified programming language. Examples of programming languages include, ActionScript, HTML, Java™, Jini™, C, C++, Perl, Python, UNIX Shell, Visual Basic, and Visual Basic Script.

As further illustrated in FIG. 2, applications 208 may execute in conjunction with operating system 206. That is, operating system 206 may be configured to facilitate the interaction of applications 208 with CPUs(s) 202, and other hardware components of computing device 200. It should be noted that in some examples, components of operating system 206 and components acting in conjunction with operating system 206 may be referred to as middleware. The techniques described herein may be utilized by devices configured to operate using any and all combinations of software architectures. Operating system 206 may be an operating system designed to be installed on laptops, desktops, smartphones, tablets, set-top boxes, digital video recorders, televisions and/or gaming devices. In one example, operating system 206 may include one or more of operating systems or middleware components developed by OpenTV, Windows operating systems, Linux operation systems, Mac operating systems, Android operating systems, and any and all combinations thereof.

System interface 210, may be configured to enable communications between components of computing device 200. In one example, system interface 210 comprises structures that enable data to be transferred from one peer device to another peer device or to a storage medium. For example, system interface 210 may include a chipset supporting Accelerated Graphics Port ("AGP") based protocols, Peripheral Component Interconnect (PCI) bus based protocols, such as, for example, the PCI Express™ ("PCIe") bus specification, which is maintained by the Peripheral Component Interconnect Special Interest Group, or any other form of structure that may be used to interconnect peer devices.

Storage devices 220 represent memory of computing device 200 that may be configured to store relatively larger amounts of information for relatively longer periods of time than system memory 204. For example, in the example where computing device 200 is included as part of a digital video recorder, storage devices 220 may be configured to store numerous video files. Similar to system memory 204, storage device(s) 220 may also include one or more non-transitory or tangible computer-readable storage media. Storage device(s) 220 may include internal and/or external memory devices and in some examples may include volatile and non-volatile storage elements. Examples of memory devices include file servers, an FTP servers, network attached storage (NAS) devices, a local disk drive, or any other type of device or storage medium capable of storing data. Storage medium may include Blu-ray discs, DVDs, CD-ROMs, flash memory, or any other suitable digital storage media.

I/O devices 222 may be configured to receive input and provide output during operation of computing device 200. Input may be generated from an input device, such as, for example, a push-button remote control, a motion based remote control, a device including a touch-sensitive screen, a device including a track pad, a mouse, a keyboard, a microphone, a video camera, a motion sensor, or any other type of device configured to receive user input. In one example, an input device may include an advanced user input device, such as a smart phone or a tablet computing device. For example, an input device may be a secondary computing device and may be configured to receive user input via touch gestures, buttons on the secondary computing device, and/or voice control. Further, in some examples, an input device may include a display that is configured to display the graphical users interfaces described herein. For example, in the case where computing device 200 includes a television, an input device may include a smart phone in communication with the television. In this example, a user may provide commands to a television by activating portions of a graphical user interface displayed on a smart phone. Output may be provided to output devices, such as, for example internal speakers, an integrated display device, and/or external components, such as, a secondary computing device. In some examples, I/O device(s) 222 may be operatively coupled to computing device 200 using a standardized communication protocol, such as for example, Universal Serial Bus protocol (USB), Bluetooth, ZigBee or a proprietary communications protocol, such as, for example, a proprietary infrared communications protocol.

In the example illustrated in FIG. 2, modem 212, transport module 214, and AV demux 216 may be configured to perform lower layer processing associated with a television provider network and network interface 218 may be configured to perform lower layer processing associated with local area network 106. In one example, modem 212 may be configured to perform physical signaling, addressing, and channel access control according to the physical and MAC layers utilized in a television provider network. In one example, modem 212 may configured to receive signals from a coaxial cable and/or an over the air signal and perform low level signal processing (e.g., demodulation). In one example, modem 212 may be configured to extract transport streams from signals received from a coaxial cable. In one example, a transport stream may be based on a transport stream defined by the Moving Pictures Experts Group (MPEG). In one example, a transport stream may include a plurality of program streams where each program stream respectively corresponds to a program available from a television network. Further, a transport stream may include a plurality of data streams (e.g., Program Map Table and EPG data).

Transport module 214 may be configured to receive data from modem 212 and process received data. For example, transport model 214 may be configured to receive a transport stream including a plurality of program streams and extract individual program streams from a received transport stream. In one example, a program stream may include a video stream, an audio stream, and a data stream. AV demux 216 may be configured to receive data from transport module 214 and process received data. For example, AV demux 216 may be configured to receive a program stream from transport module 214 and extract audio packets, video packets, and data packets. That is, AV demux 216 may apply demultiplexing techniques to separate video streams, audio streams, and data streams from a program stream. In one example, AV demux 216 may be configured to decapsulate packetized elementary video and audio streams from a transport stream defined according to MPEG-2 Part 1. It should be noted that although modem 212, transport module 214, and AV demux 216 are illustrated as having distinct functional blocks, the functions performed by modem 212, transport module 214, and AV demux 216 may be highly integrated and realized using any combination of hardware, firmware and/or software implementations.

Network interface 218 may be configured to enable computing device 200 to send and receive data via a local area network. Network interface 218 may include a network interface card, such as an Ethernet card, an optical transceiver, a radio frequency transceiver, or any other type of device configured to send and receive information. Network interface 218 may be configured to perform physical signaling, addressing, and channel access control according to the physical and MAC layers utilized in a local area network, such as for example, local area network 106. Further, in a manner similar to that described above with respect to transport module 214 and A/V demux 216, network interface 218 may be configured to extract audio packets, video packets, and data packets from a data stream. For example, network interface 218 may be configured to extract video packets, audio packets, and data packets according to one or more of internet protocol (IP), transport control protocol (TCP), real time streaming protocol (RTSP), user datagram protocol (UDP), real time protocol (RTP), MPEG transport stream protocols, and IPTV protocols. It should be noted, that the techniques described herein are generally applicable to any and all methods of digital content distribution and are not limited to particular communications network implementations.

Referring again to FIG. 2, data associated with digital content, such as, for example, music, videos, images, webpages, messages, voice communications, and applications may be stored in a computer readable medium, such as, for example, system memory 204 and storage devices 220. Data stored in a memory device may be retrieved and processed by CPU(s) 202, audio decoder 224, audio processor 226, video decoder 228, graphics processing unit 230, and display processor 232. As described above, CPU(s) 202 may be capable of retrieving and processing instructions, code, and/or data structures for implementing one or more of the techniques described herein. Each of audio decoder 224, audio processor 226, video decoder 228, graphics processing unit 230, and display processor 232 may also be capable of retrieving and processing instructions, code, and/or data structures for implementing one or more of the techniques described herein.

Audio decoder 224 may be configured to retrieve and process coded audio data. For example, audio decoder 224 may be a combination of hardware and software used to implement aspects of an audio codec. Audio data may be coded using multi-channel formats such as those developed by Dolby and Digital Theater Systems. Audio data may be coded using a compressed or uncompressed format. Examples of compressed audio formats include MPEG-1, 2 Audio Layers II and III, AC-3, AAC, and Ogg Vorbis. An example of an uncompressed audio format includes pulse-code modulation (PCM) audio format. Audio processor 226 may be configured to retrieve captured audio samples and may process audio data for output to an audio system (not shown). In some examples, audio processor 226 may include a digital to analog converter. An audio system may comprise any of a variety of audio output devices such as headphones, a single-speaker system, a multi-speaker system, or a surround sound system.

Video decoder 228 may be configured to retrieve and process coded video data. For example, video decoder 228 may be a combination of hardware and software used to implement aspects of a video codec. In one example, video decoder 228 may be configured to decode video data encode according to any number of video compression standards, such as ITU-T H.261, ISO/IEC MPEG-1 Visual, ITU-T H.262 or ISO/IEC MPEG-2 Visual, ITU-T H.263, ISO/IEC MPEG-4 Visual, ITU-T H.264 (also known as ISO/IEC MPEG-4 AVC), VP8, and High-Efficiency Video Coding (HEVC).

As described above, a device with media playback capabilities may provide a graphical user interface that enables a user to select content. A graphical user interface may include images and graphics displayed in conjunction with video content (e.g., playback icons overlaid on a video). Graphics processing unit 230 is an example of a dedicated processing unit that may be configured to generate graphical user interfaces, including the graphical user interfaces described herein. That is, graphics processing unit 230 may be configured to receive commands and content data and output pixel data. Graphic processing unit 230 may operate according to a graphics pipeline process (e.g., input assembler, vertex shader, geometry shader, rasterizer, pixel shader, and output merger). Graphics processing unit 230 may include multiple processing cores and may be configured to operate according to OpenGL (Open Graphic Library, managed by the Khronos Group) and/or Direct3D (managed by Microsoft, Inc.).

Display processor 232 may be configured to retrieve and process pixel data for display. For example, display processor 232 may receive pixel data from video decoder 228 and/or graphics processing unit 230 and output data for display. Display processor 232 may be coupled to a display, such as display 250 (not shown in FIG. 1) using a standardized communication protocol (e.g., HDMI, DVI, DisplayPort, component video, composite video, and/or VGA). Display 250 may comprise one of a variety of display devices such as a liquid crystal display (LCD), a plasma display, an organic light emitting diode (OLED) display, or another type of display device capable of presenting video data to a user. Display 250 may include a standard definition television, a high definition television or an ultra-resolution display. Further, display 250 may include an integrated display of a portable computing device (e.g., a mobile phone, a laptop, a personal data assistant (PDA), or a tablet device). As described above, in some examples a portable computing device may operate as an I/O device for a stationary computing device.

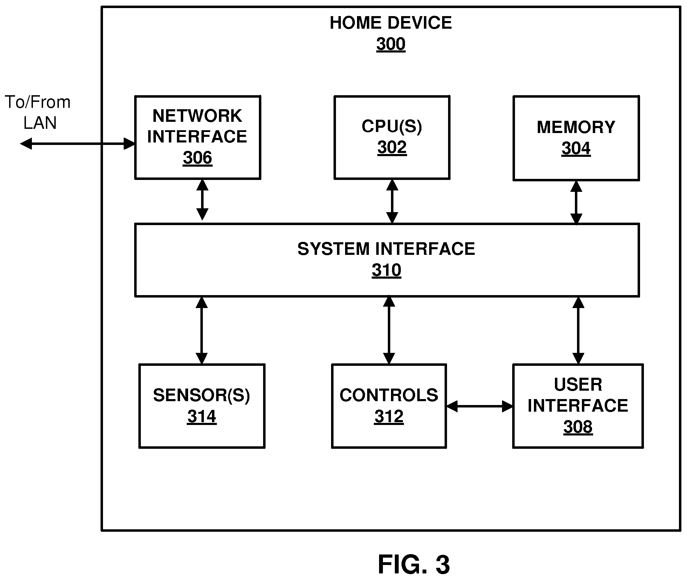

FIG. 3 is a conceptual diagram illustrating an example of a home device that may implement one or more techniques of this disclosure. Home device 300 is an example of a device that may be configured to transmit data to and receive data from a communications network, and perform one or more automated tasks. As illustrated in FIG. 3, home device 300 includes central processing unit(s) 302, memory 304, network interface 306, sensors 308, system interface 310, controls 314, and user interface 314.

CPU(s) 302 may be configured to implement functionality and/or process instructions for execution in home device 300. CPU(s) 302 may be capable of retrieving and processing instructions, code, and/or data structures for implementing one or more of the techniques described herein. Instructions may be stored on a computer readable medium, such as memory 304. System memory 304 may be described as a non-transitory or tangible computer-readable storage medium. Network interface 306 may be configured to enable home device 300 to send and receive data via a local area network. System interface 310 may be configured to enable communications between components of home device 300. Each of CPU(s) 302, memory 304, network interface 306, and system interface 310, may be similar to CPU(s) 202, system memory 204, network interface 218, and system interface 210 described above with respect to FIG. 2. It should be noted, however, that in some examples, home device 300 may have limited computing capabilities compared to computing device 200. That is, home device 300 may be configured to perform a basic set of operations via local area network. For example, in the case where home device 300 includes a washing machine, home device 300 may include computing capabilities necessary to perform washing operations and may not include computing capabilities necessary to perform advanced graphics processing.

User interface 308 may include a physical interface that enables a user to control the operation of home device 300. User interface 308 may include any and all combinations of buttons, knobs, switches, dials, key-pads, touchscreen interfaces, indicators, including visual indicators, such as, LEDs and LCD displays and audio indicators, such as, buzzers and tone generators. For example, in the case where home device includes a microwave, user interface 308 may include a keypad, an LCD numeric display, and a tone generator. It should be noted that in some in examples, user interface 308 may include a remote control operatively coupled to home device 300 using a standardized communication protocol, such as for example, Universal Serial Bus protocol (USB), Bluetooth, ZigBee or a proprietary communications protocol, such as, for example, a proprietary infrared communications protocol.

Controls 312 may include electro-mechanical controls configured to cause home device 300 to perform one or more operations in response to input received from user interface 308. Further, as described in further detail below, controls 312 may be configured to cause home device 300 to perform an operation in response receiving user input through a graphical user interface. For example, in the case where home device 300 includes a washing machine, controls 312 may include pumps and valves configured to cause water to flow into and out of the washing machine. Sensors 308 may be configured to generate measurements associated with the operation of home device 300. Measurements from sensors 308 may be used to provide feedback to controls 312. For example, in the case where home device 300 includes an oven, sensors 314 may include a temperature sensor that may be used to control a heating element. Further, measurements from sensors 314 may be used to provide visual indicators to a user. In one example, the visual indicators may be displayed as part of a graphical user interface generated by a computing device. It should be noted that although example home device 300 is illustrated as having distinct functional blocks, such an illustration is for descriptive purposes and does not limit home device 300 to a particular physical architecture. Functions of home device 300 may be realized using any combination of electro-mechanical, hardware, firmware, and/or software implementations. Further, in some examples, functional blocks on home device 300 may be implemented using distinct physical devices. For example, in the case where home device 300 includes a lamp, CPU(s) 302, memory 304, and network interface 306 may be an add-on device operably coupled to the lamp and in communication with a local area network.

As described above, control of multiple home devices through a common application may be limited. Further, as described above, devices with digital media playback capabilities may display graphical user interfaces which enable users to select content for playback. In some instances, these graphical user interfaces may be referred to and/or include electronic program guides (EPGs). Traditional EPGs may not be able to effectively integrate control of home devices with media playback. As described in detail below, computing device 200 may be configured to enable a user to monitor and control a plurality of home devices by providing one or more of the graphical user interfaces described herein.

As illustrated below, the graphical user interfaces enabling a user to monitor and control a plurality of home devices may be integrated with digital media playback. The graphical user interfaces described herein may be provided to a computing device and/or an I/O device in communication with a computing device. For example, the graphical user interfaces may be displayed on a tablet computing device in communication with a set top box. It should be noted that although the graphical user interfaces described herein are described as being displayed by a computing device operably coupled to local area network 106, in some examples, graphical user interfaces may be displayed on any computing device in communication with wide area network 104. Access to home devices 108A-108N from a wide area network may be referred to as cloud-based access. For example, a computing device may access the graphical user interfaces described herein through a login page provide through a web browser.

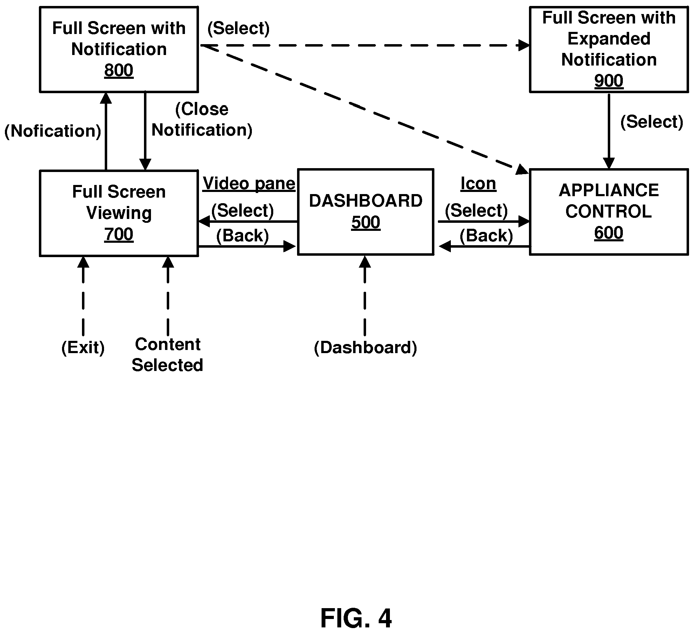

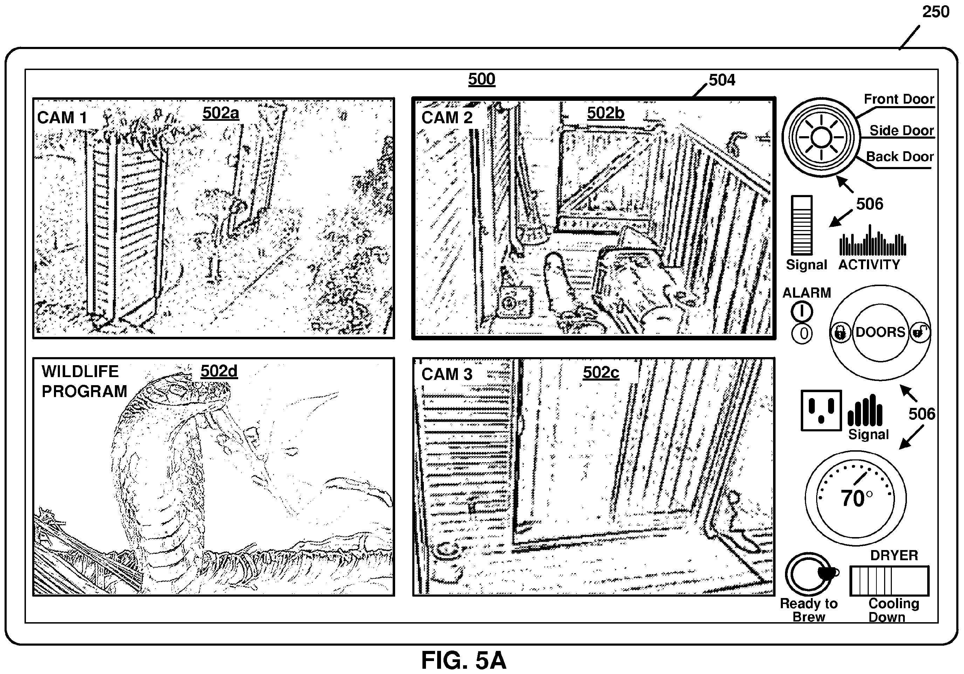

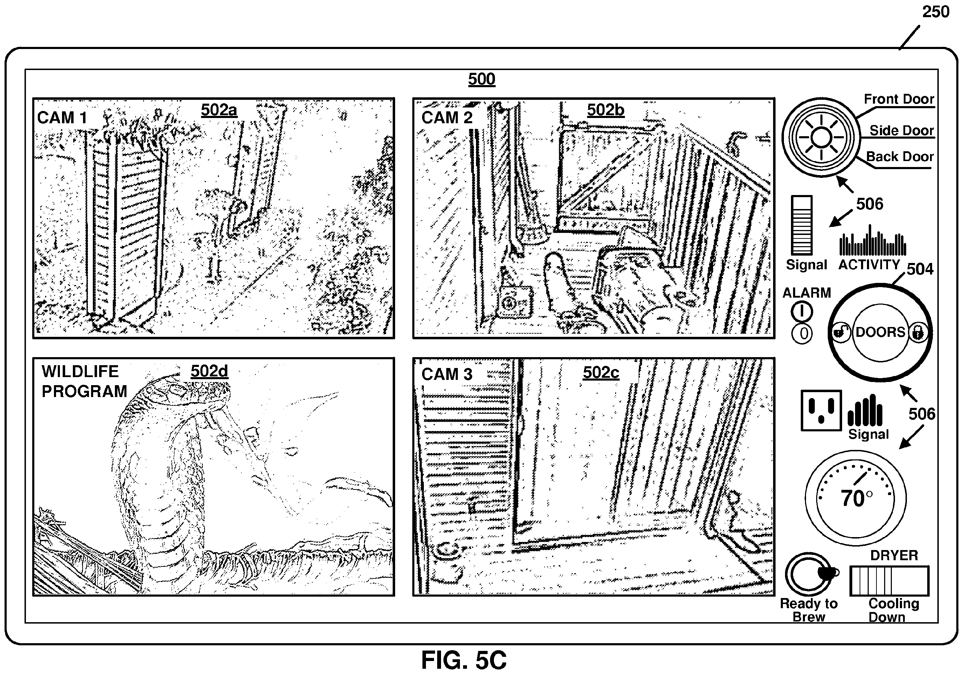

FIGS. 5A-9B are conceptual diagrams illustrating examples of graphical user interfaces that may be generated by a computing device in accordance with one or more techniques of this disclosure. FIG. 4 is a conceptual diagram illustrating example navigational paths to example graphical user interfaces in accordance with one or more techniques of this disclosure. That is, FIG. 4 illustrates examples of command sequences (e.g., sequence of button activations using an I/O device or equivalent voice commands or gestures) that may cause a particular graphical user interface to be presented. It should be noted that a computing device may display any and all combinations of the graphical user interfaces illustrated in FIGS. 5A-9B and the example descriptions of how graphical user interfaces may be presented to a user are for illustrative purposes. For example, a computing device may be configured to present a subset of the graphical user interfaces described herein using navigation paths other than the example navigation paths described with respect to FIG. 4.

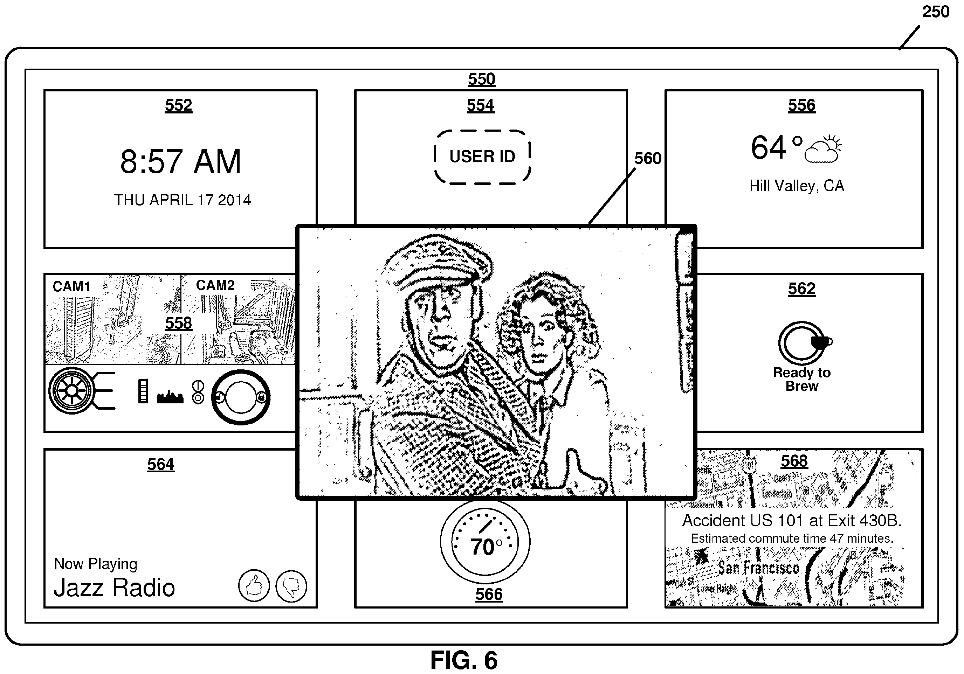

In the example illustrated in FIG. 4, a user may cause graphical user interface 500, which may be referred to as a dashboard to be displayed by executing a dashboard command. There may be numerous ways for a user to execute a dashboard command. For example, a dashboard command may include activating a dedicated button on a remote control, activating an icon on a graphical user interface using a mouse, tapping an icon on a touchscreen interface, and/or verbalizing a command. Further, in some examples, a dashboard graphical user interface may be presented initially, e.g., when a user initially powers on a computing device and/or logs into a user account. FIGS. 5A-5C and FIG. 6 are conceptual diagrams illustrating examples of graphical user interfaces in accordance with one or more techniques of this disclosure. FIGS. 5A-5C illustrate one example of a dashboard graphical user interface. FIG. 6 illustrates another example of a dashboard graphical user interface. As described in detail below, a computing device may be configured to present both graphical user interface 500 and graphical user interface 550 to a user.

As illustrated in FIGS. 5A-5C, graphical user interface 500 includes video panes 502a-502d and home device icons 506. As illustrated in FIGS. 5A-5C, one of video panes 502a-502d and home device icons 506 may be a selected item 504. It should be noted that the number of video panes and home device icons may vary based on the number and types of home devices connected to a local area network and/or the size and resolution of a display device. In the example illustrated in FIGS. 5A-5C video panes 502a-502c include video received from security cameras. In the example illustrated in FIGS. 5A-5C each of the security cameras are focused on a respective entry to a user's home. In the example illustrated in FIG. 5A-5C, video pane 502d includes video content which may be received from a one of television service provider site 110, media service provider site 118 and/or webpage content distribution site 120. It should be noted that in other examples, other combinations of video sources may be presented in graphical user interface 500. For example, graphical user interface 500 may include two videos originating from a television service provider site 110 and two videos from respective security cameras. As illustrated in FIG. 5A-5C, each of video panes 502a-502d may include a source identifier.

As described above, home devices may include any device configured to perform an automated task. In the example illustrated in FIG. 5A-5C graphical user interface 500 includes respective home device icons 506 associated with lighting (front door, side door, and back door lights), with a signal and monitored activity of security cameras, with an alarm system, with door locks, with power monitoring, with a network connection signal, with a thermostat, with a coffeemaker, and with a dryer. It should be noted that in some examples, icons associated with a home device may appear dynamically based on whether a home device is in use. For example, the icon associated with a dryer may not be presented when the dryer is not in use and/or an icon associated with a washing machine may appear when a washing machine is in use. As illustrated in FIG. 5A-5C each of home device icons 506 may indicate a status of a home device. For example, icons may indicate whether a light is on or off, whether an alarm is active or inactive, whether doors are locked or unlocked, the current setting of a thermostat and the actual temperature, and the status of an appliance.

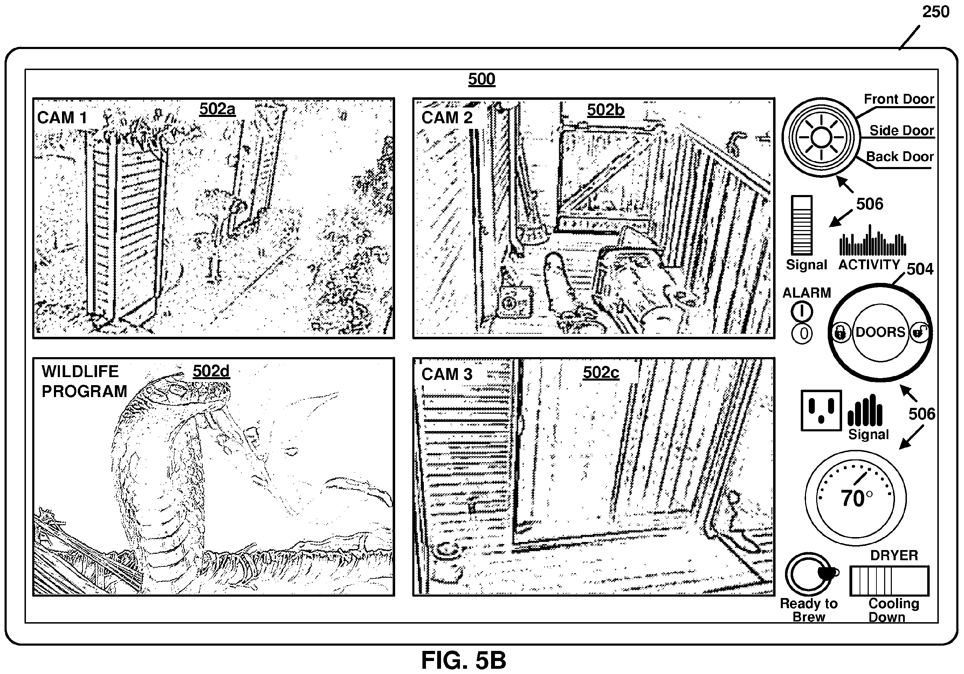

As illustrated in FIG. 5A-5C graphical user interface may enable a user to select one of video panes 502a-502d and home device icons 506. In one example, selection may occur by a user activating a sequence of navigation arrow keys on a remote control. In one example, selection may occur by a user moving a cursor (which may be visible or invisible) to a position within graphical user interface 500 (e.g., using a mouse or touching a point on a touch screen). In FIG. 5A, video pane 502b is indicated as selected 504. In FIG. 5B-5C, a home device icon associated with door locks is selected. Upon being initially selected, a video pane or a home device icon may be available for further selection. As illustrated in FIG. 4, further selection, in the case on a video pane may cause the video to be presented in a full screen viewing mode and further selection of a home device icon may cause a graphical user interface associated with appliance control to be presented. As further indicated in FIG. 4, a user may activate a back command to cause graphical user interface 500 to be presented.

It should be noted that some home devices may have dedicated graphical user interfaces for control and others may be controlled from graphical user interface 500. For example, in the example illustrated in FIGS. 5B-5C, upon selecting home device icon associated with door locks, a user may further be enabled to lock/unlock doors and graphical user interface 500 may display an updated status of door locks. That is, as illustrated in FIGS. 5B-5C the position of locked and unlocked symbols in selected home device icon 504 change. Other home device icons 506 illustrated in FIGS. 5A-5C may be capable of similar additional selections. For example, graphical user interface 500 may enable a user to turn on/off lights, activate/deactivate an alarm, change a temperature setting, change the timer setting of a dryer, and start the brewing cycle of a coffee machine. In this manner, graphical user interface 500 enables a user to monitor and control a plurality of home devices, while viewing multimedia content. As illustrated in FIG. 4, and described in further detail below with respect to 8A-9B, control of an appliance may be initiated through a notification presented to a user during a full screen viewing mode.

Referring now to FIG. 6, graphical user interface 550 illustrated in FIG. 6 includes an alternative dashboard to graphical user interface 500. Graphical user interface 550 includes a plurality of panes where each pane may respectively be associated with multimedia content, home devices, information received from wide area network, information provided by a computing device, and additional graphical user interfaces. In the example illustrated in FIG. 6, graphical user interface 550 includes time and date pane 552, user identifier pane 554, weather pane 556, dashboard pane 558, selected pane 560, appliance pane 562, media service pane 564, thermostat pane 566, and traffic pane 568. It should be noted that the panes included in graphical user interface 550 may vary for particular users and devices and may vary dynamically for particular users. Additional types of panes that may be included in graphical user interface 550 include panes associated with applications of a computing device, for example, panes may be associated social media applications (e.g., posts from friends), online shopping applications, personal fitness applications (e.g., personal activity tracking applications), personal finance application (e.g., stock tickers), to-do list applications, and news feed applications. For the sake of brevity, all of the possible types of panes are not described in detail herein. Further discussion of types panes which may be included in graphical user interface 550 may be found in commonly assigned co-pending United States patent application 14/465,043, filed August 21, 2014, which is incorporated by reference in its entirety.

In the example illustrated in FIG. 6, time and date pane 552 may be configured to display a current time and date may further indicate if a user has an upcoming appointment. User identifier pane 554 may include an identifier of a user current (e.g., a picture, an icon, and/or a text identifier) accessing a computing device displaying graphical user interface 550. That is, in the case where multiple users can log-in to a computing device, user identifier pane 554 may indicate which user is logged-in and graphical user interface 550 may be customized to respective users. Further, upon selection, user identifier pane 554 may display additional user information. Weather pane 556 may include information regarding the current weather at the user's location, a weather forecast, and/or severe weather alerts. In a similar manner, traffic pane 568 may provide a user with traffic information, such as, current traffic, a traffic forecast, and traffic alerts.

In the example illustrated in FIG. 6 selected pane 560 includes a pane displaying video content. Video content may originate from one or more of the video sources described above. Graphical user interface 550 may include additional panes associated with multimedia content. In the example illustrated in FIG. 6, graphical user interface 550 includes media service pane 564 which may include content available from television provider 110 or media service provider 118. In the example illustrated in FIG. 6, media service pane 564 is associated with an internet radio streaming service. As illustrated in FIG. 6, a selected pane may be larger than other panes. Further, a selected a pane may have associated audio content. In one example, a user may select a pane by activating a sequence of navigation arrow keys on a remote control or by moving a cursor to a position within graphical user interface 550. In some examples, panes may scroll to the left/right/up/down as a user navigates graphical user interface 550. In a manner similar to that described above with respect to FIGS 5A-5B, a pane may be available for additional selection.

As further illustrated in FIG. 6, graphical user interface 550 includes dashboard pane 558, appliance pane 562, and thermostat pane 566. Dashboard pane 558 may be associated with an additional dashboard graphical user interface. In the example, illustrated in FIG. 6, dashboard pane 558 includes a version of dashboard graphical user interface 500. Depending on the size and resolution of display 250 and video processing capabilities of a device displaying graphical user interface 550, dashboard pane 558 may include a full version of graphical user interface 500 that updates and includes video playback, a static image representing graphical user interface, and/or any and all combinations thereof. In the example, illustrated in FIG. 6, dashboard pane 558, includes a subset of video panes and home device icons described above with respect to FIGS. 5A-5C. Appliance pane 562 and thermostat pane 566 may be similar to home device icons 506 described above with respect to FIGS. 5A-5C, that is, appliance pane 562 and thermostat pane 566 may indicate that status of a home device and upon selection may enable a user to control a home device. In one example, a user may be able to configure graphical user interface 550 to select which home devices are represented in graphical user interface 550 using dedicated panes and which home devices are included in dashboard pane 558.

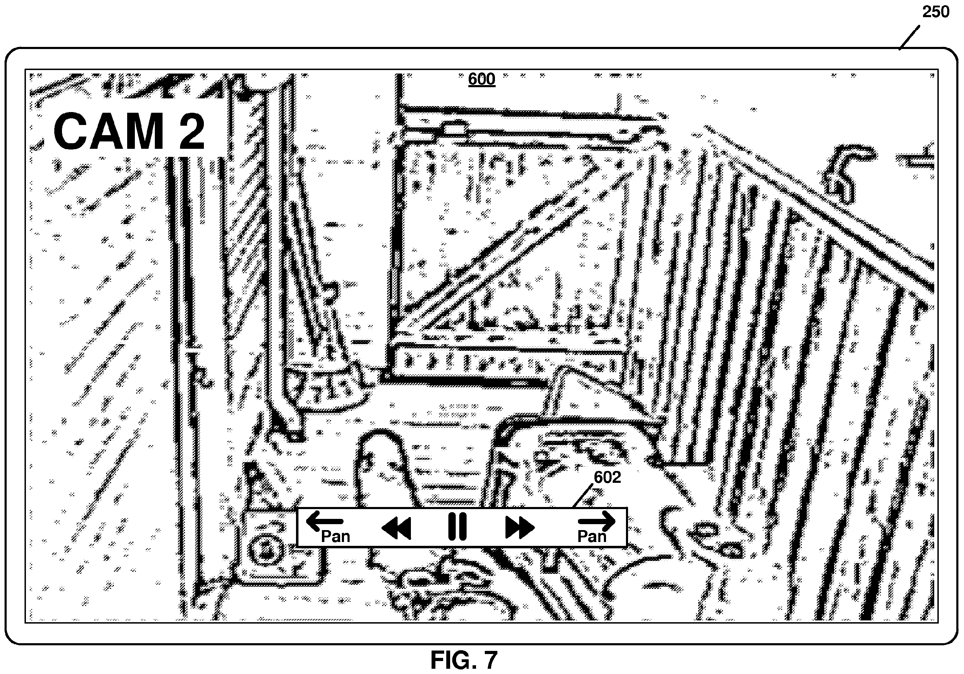

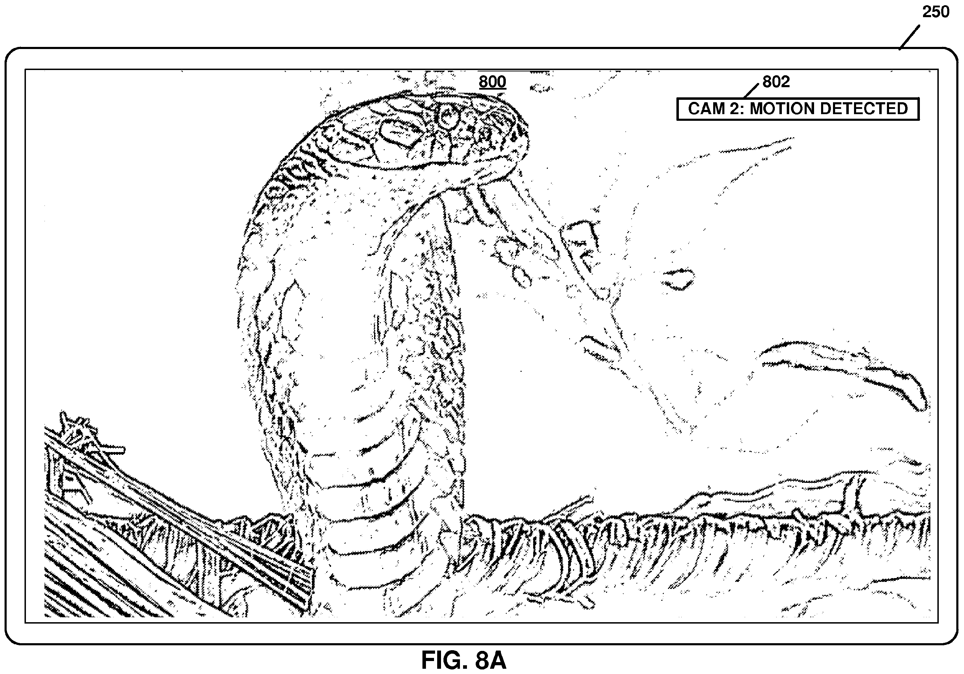

In one example, upon selection of dashboard pane 558, graphical user interface 500 may be presented. As described above with respect to FIG. 4, a user may select one of video panes 502a-502d including in graphical user interface 500. FIG. 7 illustrates an example where a video pane associated with a security camera is selected. FIGS. 8A-9D illustrate examples where a video pane associated with a media service is selected. As illustrated in FIG. 7, graphical user interface 600 includes a full screen display view of a security camera video (i.e., Camera 2) and control bar 602. Graphical user interface 600 may be a graphical user interface that provides a full screen viewing mode of a video source and provides control of an appliance (i.e., a security camera). Control bar 602 includes video playback controls (i.e., reverse, pause/play, and forward) and icons for controlling the position of the camera. That is, control bar 602 enables a user to pan a camera to the left or to the right, upon activating respective icons. In this manner, graphical user interface 500 enables a user to select a home device for further control.

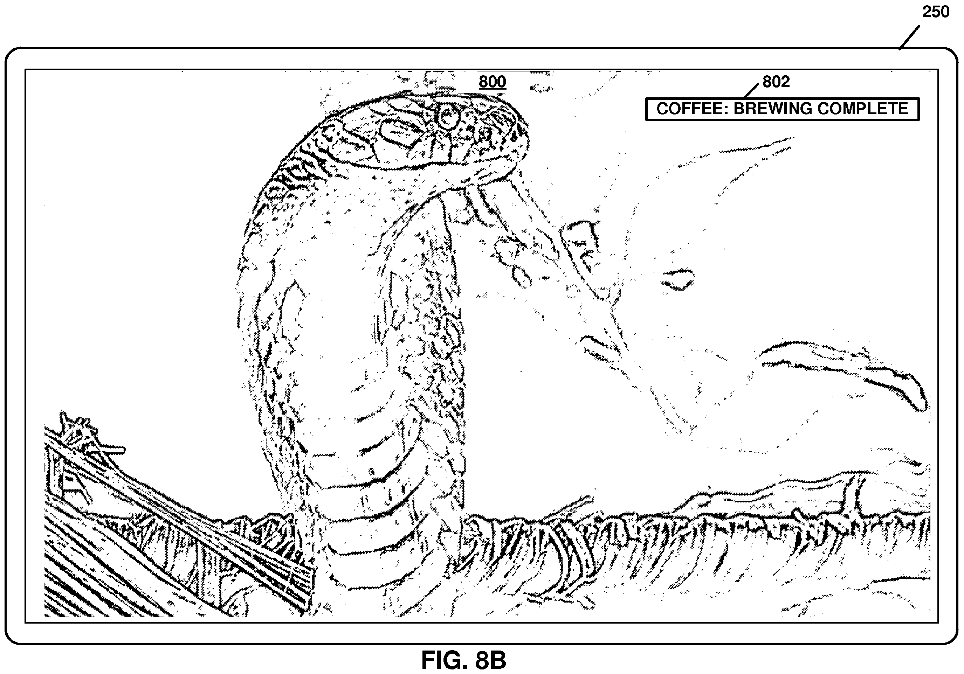

As described above, and in accordance with the inevntion, and illustrated in FIG. 4, a notification from a home device may be presented to a user while a user is viewing content in a full screen presentation. FIGS. 8A-8B illustrate examples of a graphical user interfaces including notifications from a home device. As illustrated in FIGS. 8A-8B, graphical user interface 800 includes a full screen presentation of video content and a notification bar 802. Notification bar 802 may appear on a display 250 based on information received from a home device 108A-108N. In one example, notification bar 802 may be associated with an audio notification and/or may include animation (e.g., a flashing red boundary, motion, etc.) in order to get a user's attention. Notification bar 802 may identify a home device and provide a notification specific to a home device. For example, as illustrated in FIG. 8A, a "motion detected" notification associated with a security camera may be displayed. As illustrated in FIG. 8B a "brewing complete" notification associated with a coffee maker may be displayed. It should be noted that although a single notification is displayed in each of FIGS. 8A-8B, in other examples, multiple notifications may be displayed simultaneously. For example, notifications may appear as a list or each notification may be at different portions on a display (e.g., the corners). In some example, the size of notification may be based on relative importance, which may be determined dynamically by a user. For example, notifications related to home security may appear larger than notifications associated with appliance statuses. Other types of notifications which may be included in graphical user interface 800 include notifications associated with home security and/or notification associated with appliances, e.g., cycle status notifications. For the sake of brevity, a detailed description of all possible notifications is not described herein.

As illustrated in FIG. 4, a notification from a home device may be selected by a user. In one example, upon a user selection of notification bar 802, a graphical user interface enabling control of the home device may be presented. In one example, a graphical user interface may include a full screen graphical user interface, such as for example, graphical user interface 600. In one example, upon user selection of notification bar 802, an expanded notification may be presented.

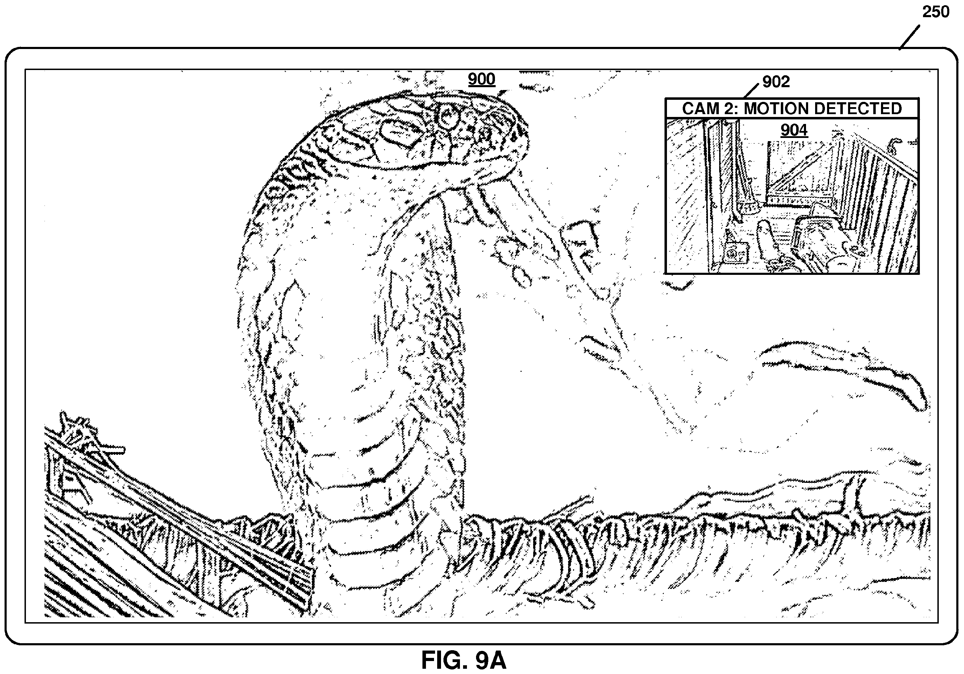

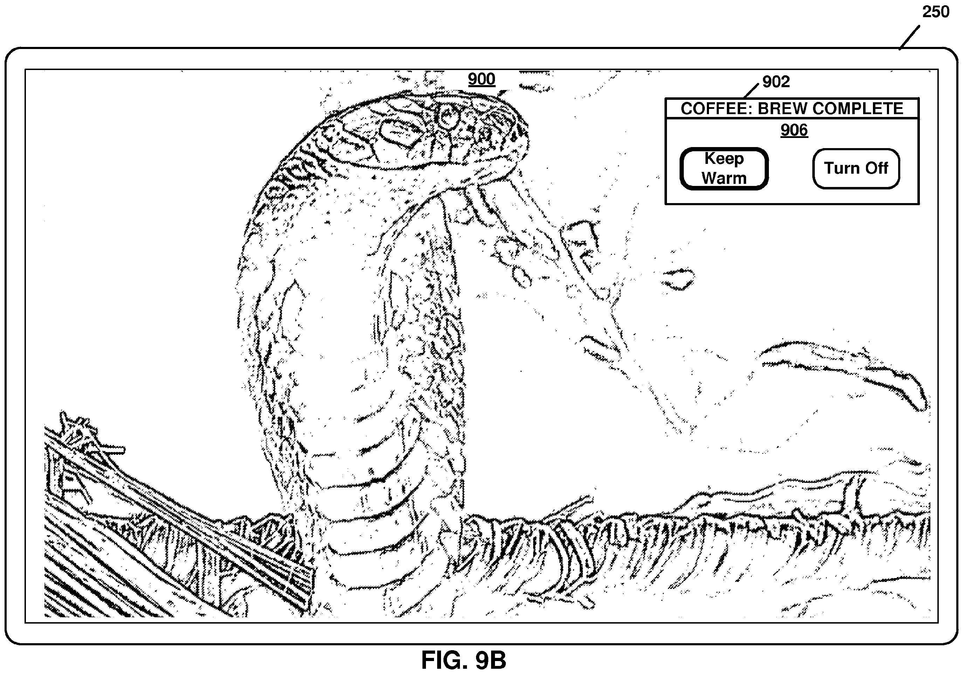

FIGS. 9A-9B are conceptual diagrams illustrating examples of a graphical user interfaces where notification bar 802 has been selected. As illustrated in FIGS. 9A-9B, graphical user interface 900 includes a full screen presentation of video content and expanded notification 902. Expanded notification 902 may include additional information pane 904 associated with a notification. In the example illustrated in FIG. 9A, additional information pane 904 includes a video feed from the security camera. In one example, a user may select additional information pane 904 and a full screen view of video associated with the notification may be displayed. Further, in one example, a user may select additional information pane 904, and a dashboard graphical user interface, such as, graphical user interface 500 may be displayed. In accordance with the invention, upon selection of additional information pane 904, a graphical user interface enabling a user to control a home device may be presented. In accordance with the invention, the graphical user interface may be included within the additional information pane, as illustrated in FIG. 9B. In accordance with the invention, illustrated in FIG. 9B, additional information pane 904 enables a user to control a home appliance, i.e., coffee maker, while continuing to view multimedia content in a full screen video mode. In this manner computing device 200 represents an example of a device configured to enable a user to monitor and control the home device while accessing digital media.

Some embodiments extend to a machine-readable medium embodying instructions which, when executed by a machine, cause the machine to perform any one or more of the methodologies described herein. Other features will be apparent from the accompanying drawings and from the detailed description that follows. Examples merely typify possible variations. Unless explicitly stated otherwise, components and functions are optional and may be combined or subdivided, and operations may vary in sequence or may be combined or subdivided. In the following description, for purposes of explanation, numerous specific details are set forth to provide a thorough understanding of example embodiments. It will be evident to one skilled in the art, however, that the present subject matter may be practiced without these specific details.

The disclosed and other embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, which is generated to encode information for transmission to suitable receiver apparatus.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a mark-up language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this patent document contains many specifics, these should not be construed as limitations on the scope of an invention that is claimed or of what may be claimed, but rather as descriptions of features specific to particular embodiments. Certain features that are described in this document in the context of separate examples can also be implemented in combination in a single embodiment. Conversely, various features that are described in the context of a single example can also be implemented in multiple embodiments separately or in any suitable sub-combination. While operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

## Claims

1. A method of enabling a user to control a home device (108A-108N), the method comprising:
providing a graphical user interface (500), wherein the graphical user interface (500) simultaneously displays a video pane (502d) presenting video associated with a media service, one or more icons (506) associated with a respective home device, and one or more video panes (502a-502c) presenting video associated with a respective home device (108A-108N), wherein at least one of the one or more icons (506) graphically indicates a status of the respective home device (108A-108N);
enabling selection of one of the one or more icons (506) to control the respective home device (108A-108N) and selection of said video pane (502d) to present the video associated with the media service in a full screen viewing mode;
causing a selectable notification (802) associated with a said home device (108A-108N) to be displayed in the graphical user interface (500) during the presenting of the video associated with the media service in the full screen viewing mode; and
based on selection of the selectable notification (802), causing display of a graphical user interface enabling a user to control the home device (108A-108N).

2. The method of claim 1, wherein at least one icon of the one or more icons (506) graphically indicates the status of the home device (108A-108N) based on whether a home device (108A-108N) is in use during simultaneous display of the video pane (502d) presenting the video associated with the media service.

3. The method of claim 1, wherein the notification (802) is associated with the home device (108A-108N) and wherein the graphical user interface enabling a user to control the home device (108A-108N comprises an expanded notification (902) displayed during the presentation of the video associated with the media service in the full screen viewing mode.

4. The method of claim 1, wherein the notification (802) is associated with a security camera and the graphical user interface enabling a user to control the home device (108A-108N comprises an expanded notification (902) including video captured by the security camera.

5. A device (102A-102N) enabling a user to control a home device (108A-108N), the device (102A-102N) comprising one or more processors configured to carry out the method of any preceding claim.

6. A machine-readable medium embodying instructions which, when executed by a machine, cause the machine to carry out the method of any one of claims 1 to 4.

## Patentansprüche

1. Verfahren, um einem Benutzer zu ermöglichen, eine Heimvorrichtung (108A-108N) zu steuern, wobei das Verfahren umfasst:
Bereitstellen einer grafischen Benutzeroberfläche (500), wobei die grafische Benutzeroberfläche (500) gleichzeitig ein Videofenster (502d), das Video darstellt, das mit einem Mediendienst verknüpft ist, ein oder mehrere Symbole (506), die mit einer jeweiligen Heimvorrichtung verknüpft sind, und ein oder mehrere Videofenster (502a-502c), die Video darstellen, das mit einer jeweiligen Heimvorrichtung (108A-108N) verknüpft ist, anzeigt, wobei mindestens eines des einen oder der mehreren Symbole (506) grafisch einen Status der jeweiligen Heimvorrichtung (108A-108N) angibt;
Ermöglichen von Auswahl eines des einen oder der mehreren Symbole (506), um die jeweilige Heimvorrichtung (108A-108N) zu steuern, und Auswahl des Videofensters (502d), um das Video, das mit dem Mediendienst verknüpft ist, in einem Vollbildanzeigemodus darzustellen;
Veranlassen einer auswählbaren Benachrichtigung (802), die mit der Heimvorrichtung (108A-108N) verknüpft ist, in der grafischen Benutzeroberfläche (500) während des Darstellens des Videos, das mit dem Mediendienst verknüpft ist, in dem Vollbildanzeigemodus anzuzeigen; und
basierend auf Auswahl der auswählbaren Benachrichtigung (802), Veranlassen von Anzeige einer grafischen Benutzeroberfläche, die einem Benutzer ermöglicht, die Heimvorrichtung (108A-108N) zu steuern.

2. Verfahren nach Anspruch 1, wobei mindestens ein Symbol des einen oder der mehreren Symbole (506) grafisch den Status der Heimvorrichtung (108A-108N) basierend darauf angibt, ob eine Heimvorrichtung (108A-108N) während gleichzeitiger Anzeige des Videofensters (502d), das das Video darstellt, das mit dem Mediendienst verknüpft ist, in Verwendung ist.

3. Verfahren nach Anspruch 1, wobei die Benachrichtigung (802) mit der Heimvorrichtung (108A-108N) verknüpft ist und wobei die grafische Benutzeroberfläche, die einem Benutzer ermöglicht, die Heimvorrichtung (108A-108N) zu steuern, eine erweiterte Benachrichtigung (902) umfasst, die während der Darstellung des Videos, das mit dem Mediendienst verknüpft ist, in dem Vollbildanzeigemodus angezeigt wird.

4. Verfahren nach Anspruch 1, wobei die Benachrichtigung (802) mit einer Sicherheitskamera verknüpft ist und die grafische Benutzeroberfläche, die einem Benutzer ermöglicht, die Heimvorrichtung (108A-108N) zu steuern, eine erweiterte Benachrichtigung (902) umfasst, die Video beinhaltet, das von der Sicherheitskamera aufgenommen wird.

5. Vorrichtung (102A-102N), die einem Benutzer ermöglicht, eine Heimvorrichtung (108A-108N) zu steuern, wobei die Vorrichtung (102A-102N) einen oder mehrere Prozessoren umfasst, der/die konfiguriert ist/sind, das Verfahren nach einem vorstehenden Anspruch umzusetzen.

6. Maschinenlesbares Medium, das Anweisungen verkörpert, die, wenn von einer Maschine ausgeführt, die Maschine veranlassen, das Verfahren nach einem der Ansprüche 1 bis 4 umzusetzen.

## Revendications

1. Procédé permettant à un utilisateur de commander un appareil domestique (108A-108N), le procédé comprenant :
la fourniture d'une interface utilisateur graphique (500), dans lequel l'interface utilisateur graphique (500) affiche simultanément un volet vidéo (502d) présentant une vidéo associée à un service multimédia, une ou plusieurs icônes (506) associées à un dispositif domestique respectif, et un ou plusieurs volets vidéo (502a-502c) présentant une vidéo associée à un dispositif domestique (108A-108N) respectif, dans lequel au moins l'une parmi les une ou plusieurs icônes (506) indique graphiquement un statut du dispositif domestique (108A-108N) respectif;
la permission d'une sélection de l'une parmi les une ou plusieurs icônes (506) pour commander le dispositif domestique (108A-108N) respectif et d'une sélection dudit volet vidéo (502d) pour présenter la vidéo associée au service multimédia dans un mode de visualisation plein écran ;
l'instruction à une notification sélectionnable (802) associée à un dit dispositif domestique (108A-108N) d'être affichée dans l'interface utilisateur graphique (500) au cours de la présentation de la vidéo associée au service multimédia dans un mode de visualisation plein écran ; et
sur la base d'une sélection de la notification sélectionnable (802), l'instruction d'un affichage d'une interface utilisateur graphique permettant à un utilisateur de commander le dispositif domestique (108A-108N).

2. Procédé selon la revendication 1, dans lequel au moins une icône parmi les une ou plusieurs icônes (506) indique graphiquement le statut du dispositif domestique (108A-108N) selon qu'un dispositif domestique (108A-108N) est ou non en utilisation au cours d'un affichage simultané du volet vidéo (502d) présentant la vidéo associée au service multimédia.

3. Procédé selon la revendication 1, dans lequel la notification (802) est associée au dispositif domestique (108A-108N) et dans lequel l'interface utilisateur graphique permettant à un utilisateur de commander le dispositif domestique (108A-108N) comprend une notification étendue (902) affichée au cours de la présentation de la vidéo associée au service multimédia dans le mode de visualisation plein écran.

4. Procédé selon la revendication 1, dans lequel la notification (802) est associée à une caméra de sécurité et l'interface utilisateur graphique permettant à un utilisateur de commander le dispositif domestique (108A-108N) comprend une notification étendue (902) incluant une vidéo capturée par la caméra de sécurité.

5. Dispositif (102A-102N) permettant à un utilisateur de commander un dispositif domestique (108A-108N), le dispositif (102A-102N) comprenant un ou plusieurs processeurs configurés pour réaliser le procédé selon l'une quelconque des revendications précédentes.

6. Support lisible par machine incorporant des instructions qui, lorsqu'elles sont exécutées par une machine, amènent la machine à réaliser le procédé selon l'une quelconque des revendications 1 à 4.
